# EUROPÄISCHE PATENTANMELDUNG

(11) **EP 3 798 598 A1**
(43) Veröffentlichungstag der Anmeldung: **31.03.2021**
(21) Anmeldenummer: 20198194.1
(22) Anmeldetag: 24.09.2020
(51) Int. Cl.: G01L 1/22, G01B 7/16, G01L 1/26, B23H 1/00, B23B 27/04, B23B 51/00, B23H 9/14

(54) **VORRICHTUNG, VERFAHREN UND SYSTEM ZUM MESSEN EINER EIGENSPANNUNG EINES MESSOBJEKTS**

(30) Priorität: 25.09.2019 DE 102019125800
(71) Anmelder: Octogon GmbH, 8700 Leoben (AT)
(72) Erfinder: Eisl, Daniel, 8700 Leoben (AT); Ottlinger, Matthias, 8010 Graz (AT)
(74) Vertreter: Manitz Finsterwald Patent- und Rechtsanwaltspartnerschaft mbB

(57) **Zusammenfassung**

Die Erfindung betrifft eine Vorrichtung zum Messen einer Eigenspannung eines Messobjekts umfassend: eine Dehnungsmessvorrichtung zur Anlage an das Messobjekt, eine Führung für ein Zerspanungswerkzeug, welche derart angeordnet ist, dass mittels des Zerspanungswerkzeugs eine Ausnehmung an einer durch die Führung definierten Position in das Messobjekt einbringbar ist, und ein Basisteil, wobei die Dehnungsmessvorrichtung derart an dem Basisteil gehalten ist, dass sie in Anlage mit dem Messobjekt eine definierte Position relativ zur Führung aufweist.

## Beschreibung

Die vorliegende Erfindung betrifft eine Vorrichtung zum Messen einer Eigenspannung eines Messobjekts umfassend eine Dehnungsmessvorrichtung zur Anlage an das Messobjekt und eine Führung für ein Zerspanungswerkzeug, welche derart angeordnet ist, dass mittels des Zerspanungswerkzeugs eine Ausnehmung an einer durch die Führung definierten Position in das Messobjekt einbringbar ist.

Die Erfindung betrifft auch ein Verfahren zum Messen einer Eigenspannung eines Messobjekts sowie ein Eigenspannungsmesssystem.

Zum Messen der Eigenspannung von Messobjekten, insbesondere von Bauteilen, sind verschiedene Verfahren bekannt. Beispielsweise wird die Eigenspannung mithilfe von Röntgenstrahlen gemessen. Derartige Verfahren haben jedoch den Nachteil, dass sie im Wesentlichen nur nahe der Oberfläche des Messobjekts wirksam sind. Zudem funktionieren diese Verfahren unterschiedlich gut bei verschiedenen Materialien. So kann Stahl hiermit noch relativ gut untersucht werden. Zum Beispiel bei Aluminium funktionieren diese Verfahren aber deutlich weniger gut.

Ein weiteres bekanntes Verfahren umfasst das Einbringen einer Bohrung in das Messobjekt und ein Messen einer Verformung des Messobjekts in der Nähe der Bohrung mithilfe eines sogenannten Dehnungsmessstreifens. Ein solcher wird üblicherweise vor Einbringen der Bohrung auf die Messobjektoberfläche aufgeklebt. Dieses Verfahren hat insbesondere den Nachteil, dass das Anbringen bzw.

Aufkleben des Dehnungsmessstreifens besondere Fertigkeiten erfordert. Somit ist eine hohe Messgenauigkeit nicht immer gewährleistet und erfordert einen großen Aufwand.

Es ist eine Aufgabe der Erfindung, eine Vorrichtung der eingangs genannten Art bereitzustellen, die besonders einfach in der Handhabung ist und/oder mittels derer Messungen mit hoher Messgenauigkeit auf einfache Weise möglich sind.

Diese Aufgabe wird durch eine Vorrichtung nach Anspruch 1 gelöst, und insbesondere dadurch, dass ein Basisteil vorgesehen ist, an welchem die Dehnungsmessvorrichtung derart gehalten ist, dass sie in Anlage mit dem Messobjekt eine (insbesondere dauerhaft gleichbleibende) definierte Position relativ zur Führung aufweist.

Durch die Führung und die definierte Position der Dehnungsmessvorrichtung relativ zur Führung ist eine definierte Positionierung der Dehnungsmessvorrichtung relativ zur Ausnehmung während eines Messvorgangs auf einfache Weise sichergestellt. Ein Bediener der Vorrichtung kann somit auf besonders einfache Weise eine Messung mit hoher Messgenauigkeit durchführen. Der Bediener benötigt in der Folge wenig oder keine Übung in der Handhabung der Vorrichtung und dennoch ist die Messunsicherheit besonders klein. Zudem kann die Eigenspannung mittels der Vorrichtung unabhängig vom Material des Messobjekts zuverlässig gemessen werden.

Bevorzugt kann die Führung durch das Basisteil definiert sein und/oder mit diesem fest verbunden sein. Weiter bevorzugt kann das Basisteil statisch am Messobjekt befestigbar oder befestigt sein.

Gemäß einer Ausführungsform ist vorgesehen, dass die Führung und die Dehnungsmessvorrichtung durch das Basisteil relativ zueinander fest positioniert oder fest positionierbar sind, insbesondere zumindest wenn sich die Dehnungsmessvorrichtung in Anlage mit dem Messobjekt und/oder in einer Messposition befindet. Hierdurch wird die Vorrichtung weiter vereinfacht.

Vorzugsweise kann die Führung zur Führung eines Bohrers ausgebildet sein. Durch einen Bohrer lässt sich eine Ausnehmung während eines Messvorgangs besonders einfach einbringen. Bei dem Bohrer kann es sich beispielsweise um einen solchen zum Einbringen einer kreiszylindrischen Ausnehmung handeln, insbesondere um einen Spiralbohrer. Alternativ kann der Bohrer beispielsweise zum Einbringen einer kreisringzylindrischen Ausnehmung und/oder als Kernbohrer oder Bohrkrone ausgebildet sein.

Allgemein bevorzugt kann die Vorrichtung und/oder das Zerspanungswerkzeug einen Anschlag zum Definieren einer Tiefe der Ausnehmung aufweisen. Hierdurch wird eine genaue Eigenspannungsmessung weiter vereinfacht. Der Anschlag bzw. die Tiefe kann beispielsweise einstellbar sein. Auf diese Weise kann z.B. schrittweise die Tiefe der Ausnehmung bzw. eines Bohrlochs eingestellt werden. Zudem ist es möglich, den Vorschub (d.h. die Geschwindigkeit mit welcher die Tiefe erreicht wird) einzustellen, insbesondere schrittweise.

Weiterhin kann die Tiefe des Bohrlochs/der Ausnehmung erfasst werden, beispielsweise mittels einer Skala, welche beim Aufsetzen des Zerspanungswerkzeugs auf dem Messobjekt auf Null gestellt werden kann. Auf diese Weise kann erfasst werden, welche Veränderung der Eigenspannung bei welcher Tiefe aufgetreten ist.

Mit Vorteil kann es vorgesehen sein, dass die Dehnungsmessvorrichtung an dem Basisteil befestigt und/oder gehalten ist. Hierdurch wird die Handhabung der Vorrichtung weiter vereinfacht, da die Dehnungsmessvorrichtung nicht separat angebracht werden muss, sondern die Vorrichtung bzw. das Basisteil insbesondere einfach an das Messobjekt angelegt werden kann und somit die Dehnungsmessvorrichtung hierdurch bereits wie gewünscht in Anlage mit dem Messobjekt und in eine Messposition gebracht wird. Die Dehnungsmessvorrichtung kann generell beispielsweise mittelbar oder unmittelbar an dem Basisteil befestigt sein.

Bei einer weiteren Ausführungsform weist die Vorrichtung eine Halterung zur Befestigung des Basisteils an dem Messobjekt auf. Es ist also insbesondere keine zusätzliche Befestigungseinrichtung nötig, sondern die Vorrichtung bringt die Befestigungseinrichtung bzw. Halterung bereits mit. Hierdurch wird der Einsatz der Vorrichtung bzw. das Messen der Eigenspannung weiter vereinfacht. Alternativ oder zusätzlich kann grundsätzlich eine Halterung zum direkten Befestigen der Dehnungsmessvorrichtung am Messobjekt vorgesehen sein. Bevorzugt ist jedoch die Dehnungsmessvorrichtung mittelbar über das Basisteil von der Halterung am Messobjekt gehalten bzw. befestigt.

Bevorzugt kann das Zerspanungswerkzeug relativ zur Halterung bzw. zum Basisteil bewegt werden, um eine Anpassung der Position des Bohrlochs zu ermöglichen. Die Bewegung kann beispielsweise durch Stellschrauben bewirkt werden, insbesondere durch zwei Stellschrauben, welche zueinander senkrechte Bewegungen in x-y-Richtung ermöglichen. Die Bewegung in einer Richtung kann bis zu 5mm betragen. Die Bewegung und/oder die Position des Zerspanungswerkzeugs kann mittels eines geeigneten Messmittels erfasst werden.

Weiter bevorzugt kann die Vorrichtung eine Lichtmarkierung, z.B. mittels eines Lasers, an derjenigen Stelle projizieren, wo das Bohrloch später eingebracht werden wird.

Die Halterung kann zum Beispiel einen Magneten und/oder eine Klemmvorrichtung aufweisen. Hierdurch kann auf einfache Weise eine sichere Positionierung der Vorrichtung gewährleistet werden.

Generell kann die Halterung insbesondere derart ausgebildet sein, dass sie das Basisteil, und/oder insbesondere hierüber die Dehnungsmessvorrichtung, an das Messobjekt anpresst, wobei insbesondere ein Anpressdruck (bzw. eine Anpresskraft) derart groß ist, dass eine Dehnung des Messobjekts aufgrund von Haftreibung zwischen der Dehnungsmessvorrichtung und dem Messobjekt auf die Dehnungsmessvorrichtung übertragen wird. Die Dehnung des Messobjekts infolge des Einbringens der Ausnehmung wird dann mittels der Dehnungsmessvorrichtung erfasst.

Das Basisteil und/oder die Dehnungsmessvorrichtung wird vorzugsweise mittels der Halterung zumindest so stark an das Messobjekt angepresst, dass eine Übertragung der Dehnung des Messobjekts durch Haftreibung auf die Dehnungsmessvorrichtung stattfinden kann, z.B. unmittelbar oder mittelbar, etwa über eine Feder. Dadurch ist es nicht mehr notwendig, das Dehnungsmesselement aufwendig an das Messobjekt zu kleben oder an das Messobjekt zu schweißen oder einen sonstigen Stoffschluss zu realisieren. Die gesamte Dehnungsmessvorrichtung kann durch die vergleichsweise einfache Halterung an das Messobjekt angepresst werden und kann folglich auch auf einfache Weise ausgetauscht werden.

Um die Schaffung der Haftreibung zu erleichtern, kann ein Gehäuse der Dehnungsmessvorrichtung auf der Außenseite und insbesondere im Bereich eines Anlageabschnitts aufgeraut sein und/oder eine Beschichtung aufweisen, insbesondere mit Gummi oder einem anderen wenig gleitenden Material.

Gemäß einer Ausführungsform weist die Halterung ein Spannband auf, wobei das Spannband bevorzugt dazu ausgebildet ist, mit einem Befestigungsmittel, insbesondere einer Befestigungsschraube, zusammenzuwirken und das Basisteil bzw. die Dehnungsmessvorrichtung an das Messobjekt anzupressen.

Allgemein gesprochen, kann die Halterung ein Spannmittel umfassen, welches einen Druck und/oder eine Kraft auf das Basisteil erzeugt. Bevorzugt können die von dem Spannmittel erzeugte Kraft und/oder der von dem Spannmittel erzeugte Druck einstellbar sein, beispielsweise mittels eines Werkzeugs wie einer Drehmomentratsche.

Die Befestigungsschraube kann das Spannmittel bilden und beispielsweise in einem Gewinde im Spannband geführt sein und auf eine Druckplatte der Dehnungsmessvorrichtung oder auch direkt auf das Gehäuse drücken, um den notwendigen Anpressdruck zu erzeugen. Die Stärke des Anpressdrucks ist bevorzugt durch die Stärke des Anzugsdrehmoments der Spannschraube einstellbar. Durch das Anpressen mithilfe eines Spannbands kann die Vorrichtung mit geringem Aufwand an Messobjekten unterschiedlicher Geometrie aufgebracht werden. Außerdem ist es auch denkbar, mehrere Eigenspannungsmessvorrichtungen und/oder Basisteile mit demselben Spannband anzupressen. Das Spannband kann rein beispielhaft ein Metallspannband sein. Insbesondere ist das Spannband um das Messobjekt umlaufend ausgebildet.

Insoweit sich hier auf "die Vorrichtung" bezogen wird, ist die erfindungsgemäße Eigenspannungsmessvorrichtung bzw. eine ihrer Ausführungsformen gemeint, dies in Abgrenzung zur Dehnungsmessvorrichtung, welche insbesondere den eigentlichen Sensor bildet oder umfasst. Gleichwohl können die hierin beschriebenen Ausführungsformen einer Halterung auch zur Weiterbildung einer Halterung der Dehnungsmessvorrichtung herangezogen werden.

Die Befestigung der Vorrichtung mittels eines Spannbandes erlaubt die Anbringung der Vorrichtung in einer Vielzahl von Anwendungsbereichen. Beispielsweise kann die Vorrichtung an einer Schiffswelle angebracht werden, um deren Eigenspannung zu messen. Alternativ kann die Vorrichtung etwa an einem Kranausleger zur Messung seiner Eigenspannung angebracht werden.

Gemäß einer weiteren Ausführungsform weist die Halterung zumindest einen Magneten auf, der insbesondere dazu ausgelegt ist, ein Gehäuse der Dehnungsmessvorrichtung an das Messobjekt anzupressen. Das Aufbringen des Basisteils an magnetischen Messobjekten kann also durch einen ausreichend starken Magneten erfolgen. Dabei kommt der Magnet bevorzugt nicht direkt mit dem Messobjekt in Berührung, um eventuelle Verformungen des Messobjekts (und damit Messartefakte) zu vermeiden. Durch entsprechende Abstandshalter, wie zum Beispiel aus Filz oder einem anderen weichen Material, kann dies vermieden werden. Die Abstandshalter können auch Stahlkugeln umfassen und zwischen dem Magneten und dem Messobjekt angeordnet sein. Der Magnet kann insbesondere ein Elektromagnet sein, um die Vorrichtung wieder vom Messobjekt lösen zu können.

Gemäß einer weiteren Ausführungsform weist die Halterung zumindest eine Klemmvorrichtung auf, insbesondere eine Zwinge, die dazu ausgebildet ist, mit einem Befestigungsmittel, insbesondere einer Befestigungsschraube, zusammenzuwirken und das Basisteil an das Messobjekt anzupressen. Die Klemmvorrichtung kann das Messobjekt von zumindest zwei gegenüberliegenden Seiten einklemmen, wobei die Klemmvorrichtung zugleich auch das Basisteil und bevorzugt mittelbar die Dehnungsmessvorrichtung an das Messobjekt anpresst. Mittels der Befestigungsschraube kann die Stärke der Klemmung und damit wiederum der Anpressdruck eingestellt werden.

Gemäß einer weiteren Ausführungsform weist die Halterung zumindest einen Keil auf, der dazu ausgebildet ist, mit einem Befestigungsmittel zusammenzuwirken, insbesondere mit einer Befestigungsschraube, um das Basisteil bzw. die Dehnungsmessvorrichtung an das Messobjekt anzupressen. Diese Art der Halterung ist insbesondere bei Messobjekten in der Form von Hohlprofilen von Nutzen.

Beispielsweise kann die Vorrichtung zusammen mit der den Keil umfassenden Halterung in das Hohlprofil eingeschoben werden. Der Keil kann relativ zu einer Halteplatte und relativ zu dem Basisteil mittels des Befestigungsmittels verschieblich gelagert sein. Beim Betätigen des Befestigungsmittels (also z.B. beim Anziehen der Befestigungsschraube) kann der Keil derart bewegt werden, dass der Keil das Basisteil und/oder die Dehnungsmessvorrichtung von innen gegen das Hohlprofil drückt. Auf diese Weise können Eigenspannungsmessvorrichtungen auch innerhalb von Profilen oder Rohren angebracht werden. Außerdem können durch diese Art der Halterung auch mehrere Eigenspannungsmessvorrichtungen bzw. Basisteile gleichzeitig montiert werden. Dazu wird ein Paket aus einem oder mehreren Keilen und mehreren Vorrichtungen an die gewünschte Stelle innerhalb des Hohlprofils geschoben. Anschließend wird die Befestigungsschraube festgezogen, wodurch die Vorrichtungen durch den Keil bzw. die Keile an das Messobjekt gepresst werden. Wird hierbei nur ein einziger Keil verwendet, so kann der Keil rotationssymmetrisch oder achsensymmetrisch um das Befestigungsmittel (d.h. die Befestigungsschraube) herum ausgebildet sein und beispielsweise die Form eines Kegel- oder Pyramidenstumpfs aufweisen.

Gemäß einer weiteren Ausführungsform kann auch eine mit Druckstangen gekoppelte Spindel als Halterung verwendet werden, um die Vorrichtung bzw. das Basisteil in einem Hohlprofil an eine Innenwand des Hohlprofils anzupressen. Hierbei können z.B. vier Druckstangen verwendet werden, welche jeweils an der Spindel befestigt sind. Jeweils zwei Druckstangen sind derart verbunden, dass die beiden Druckstangen eine Kraft an etwa derselben Stelle der Innenwand des Hohlprofils einbringen. Die Stellen, an welchen die Druckstangen auf die Innenwand des Hohlprofils drücken, liegen bevorzugt einander bezüglich der Spindel gegenüber. Die vier Druckstangen können bevorzugt eine Raute bilden. An einer oder an beiden Stellen kann eine Dehnungsmessvorrichtung zwischen den Druckstangen und der Innenwand platziert werden, die beim Anziehen der Spindel mittels der Druckstangen an die Innenwand gepresst werden. Hierzu kann die Spindel ein Links-und ein Rechtsgewinde aufweisen.

Gemäß einer weiteren Ausführungsform kann auch eine Zangenhalterung mit einem Befestigungsmittel und/oder einem elastischen Element als Halterung verwendet werden, um zumindest eine Eigenspannungsmessvorrichtung und/oder zumindest ein Basisteil an ein Messobjekt anzupressen. Hierbei kann die Zangenhalterung zwei sich an einem Kreuzungspunkt kreuzende und/oder aufeinandertreffende Schenkel aufweisen, die um eine gemeinsame Drehachse drehbar sind, welche vorzugsweise durch den Kreuzungspunkt verläuft. Zwischen den Schenkeln kann auch das Befestigungsmittel, insbesondere eine Befestigungsschraube, angeordnet sein. Die Befestigungsschraube kann bei einer Ausführungsform durch den Kreuzungspunkt verlaufen, um beispielsweise eine vorher eingestellte Schenkelposition festzustellen. Bei einer anderen Ausführungsform ist die Befestigungsschraube derart zwischen den Schenkeln angeordnet, dass der notwendige Anpressdruck zum Beaufschlagen der Schenkel durch das Feststellen der Befestigungsschraube erzeugt werden kann. Zusätzlich oder alternativ kann zwischen den Schenkeln das elastische Element (z.B. eine Feder) angeordnet sein, das die beiden Schenkel gegeneinander beaufschlagt, um den Anpressdruck zu erzeugen. An jeweils einem Ende eines Schenkels können, insbesondere glockenförmige, Druckplatten angeordnet sein, die jeweils an einer der Dehnungsmessvorrichtung zugewandten Seite eine plane Fläche aufweisen. Die Druckplatten und das elastische Element liegen sich bevorzugt bezüglich der Drehachse gegenüber. Die plane Fläche wird durch den von der Zangenhalterung erzeugten Anpressdruck gegen das Basisteil gedrückt, insbesondere wodurch mittelbar die Dehnungsmessvorrichtung an das Messobjekt gepresst wird.

Des Weiteren ist es möglich, zwei Eigenspannungsmessvorrichtungen mit nur einer Zangenhalterung an zwei gegenüberliegende Seiten des Messobjekts anzupressen. Die Vorrichtungen bzw. Basisteile werden dabei von der jeweiligen Druckplatte eines Schenkels an jeweils eine von zwei sich gegenüberliegende Seiten des Messobjekts gepresst.

Gemäß einer Weiterbildung ist die Vorrichtung dazu ausgebildet, die Dehnungsmessvorrichtung, insbesondere ausschließlich, durch Pressen in Anlage mit dem Messobjekt zu halten. Somit kann auf einfache Weise die Dehnungsmessvorrichtung, insbesondere mit einem definierten Anpressdruck, am Messobjekt in Anlage gehalten sein. Bevorzugt kann eine Formänderung der Messobjektoberfläche über Haftreibung zwischen dieser und der Dehnungsmessvorrichtung an Letztere übertragen werden. Generell kann zum Beispiel kein Kleber zwischen der Dehnungsmessvorrichtung und dem Messobjekt vorgesehen sein. Allgemein wird die Vorrichtung durch das Anpressen der Dehnungsmessvorrichtung an das Messobjekt weiter vereinfacht, insbesondere da, wie sonst etwa bei Dehnungsmessstreifen üblich, die Dehnungsmessvorrichtung nicht zuvor aufwendig auf die Messobjektoberfläche aufgeklebt werden muss und anschließend aufwendig entfernt werden muss.

Bei einer weiteren Ausführungsform ist eine Dehnungsmessvorrichtung vorgesehen, die zentrisch zur Führung angeordnet ist. Insbesondere kann die Dehnungsmessvorrichtung konzentrisch und/oder innerhalb einer kreisringzylindrischen Ausnehmung und/oder Ringnut angeordnet sein, welche insbesondere durch einen Kernbohrer oder eine Bohrkrone einbringbar ist.

Alternativ oder zusätzlich können zum Beispiel mehrere Dehnungsmessvorrichtungen vorgesehen sein, die um eine Führungsachse und/oder um eine Ausnehmung herum gleichmäßig verteilt angeordnet sind. Bevorzugt können wenigstens oder genau drei Dehnungsmessvorrichtungen vorgesehen sein.

Bei einem weiteren Beispiel ist vorgesehen, dass die Dehnungsmessvorrichtung mittels einer Feder gegenüber dem Basisteil abgestützt und/oder in Anlage mit dem Messobjekt gehalten ist. Durch die Feder kann auf einfache Weise ein definierter Anpressdruck für die Dehnungsmessvorrichtung sichergestellt werden. Hierdurch wird die Messgenauigkeit weiter erhöht. Die Feder kann also insbesondere die Kraft definieren, mit der die Dehnungsmessvorrichtung an dem Messobjekt gehalten ist.

Bei einer vorteilhaften Weiterbildung umfasst die Dehnungsmessvorrichtung z.B. ein Gehäuse, welches einen allseitig abgeschlossenen mit einer Flüssigkeit und/oder einem duktilen Feststoff gefüllten Innenraum begrenzt, und zumindest ein Dehnungsmesselement zur Erfassung einer Verformung des Gehäuses, welches in dem Innenraum angeordnet ist und zumindest abschnittsweise oder vollständig an einer Innenwand des Gehäuses anliegt. Eine derartige Dehnungsmessvorrichtung wird nachfolgend vereinfachend als kapselförmig bezeichnet. Besonders vorteilhaft kann das Gehäuse Polyimid umfassen und/oder mit Silikon gefüllt sein.

Beim Einsatz der kapselförmigen Dehnungsmessvorrichtung kann die Dehnungsmessvorrichtung an ein Messobjekt angepresst werden, wodurch die Dehnungsmessvorrichtung mit ihrem Gehäuse, insbesondere flächig, an dem Messobjekt anliegt. Das Gehäuse wird bevorzugt zumindest so stark an das Messobjekt angepresst, dass es zu einer Haftreibung zwischen dem Messobjekt und dem Gehäuse kommt. Aufgrund der Haftreibung werden Verformungen bzw. Dehnungen des Messobjekts auf das Gehäuse der Dehnungsmessvorrichtung übertragen, wie oben bereits kurz erläutert. Die hierdurch auftretende Verformung bzw. Dehnung des Gehäuses der Dehnungsmessvorrichtung kann dann wiederum mittels des Dehnungsmesselements im Innenraum der Dehnungsmessvorrichtung erfasst werden, da das Dehnungsmesselement an der Innenwand des Innenraums anliegt und Verformungen des Gehäuses erfasst. Die Verformung des Messobjekts wird somit auf die Dehnungsmessvorrichtung übertragen, wodurch sich das Dehnungsmesselement entsprechend der Verformung der Außenwand bzw. der Innenwand der Dehnungsmessvorrichtung ebenso verformt. Diese Dehnung/Verformung wird letztendlich registriert und als Messergebnis ausgegeben. Die Verformung des Dehnungsmesselements kann beispielsweise als analoges oder digitales elektrisches Signal ausgegeben werden.

Durch die kapselförmige Dehnungsmessvorrichtung wird es somit ermöglicht, eine Dehnungsmessvorrichtung auf einfache Weise an einem Messobjekt anzubringen, wobei insbesondere der Klebeprozess entfallen kann. Das Dehnungsmesselement muss also nicht mehr einzeln aufwendig auf das Messobjekt aufgeklebt werden. Stattdessen kann das Gehäuse der gesamten Dehnungsmessvorrichtung von einem Basisteil an das Messobjekt angepresst werden, wobei das Basisteil z.B. durch eine, insbesondere mechanisch einfache, Halterung am Messobjekt gehalten sein kann.

Die Anbringung der kapselförmigen Dehnungsmessvorrichtung benötigt folglich kein speziell geschultes Personal und ist außerdem wenig fehleranfällig. Die mit der Verwendung einer solchen Dehnungsmessvorrichtung verbundenen Kosten können somit deutlich reduziert werden.

Überdies ist auch der Austausch der kapselförmigen Dehnungsmessvorrichtung auf einfache Weise möglich, da die Dehnungsmessvorrichtung lediglich an das Messobjekt angepresst ist, aber nicht z.B. mit dem Messobjekt verklebt ist. Die Dehnungsmessvorrichtung kann generell z.B. vom Basisteil entfernbar und/oder durch eine neue Dehnungsmessvorrichtung ersetzbar sein, die wiederum, etwa durch eine Halteeinrichtung an dem Basisteil befestigbar sein kann.

Es ist weiterhin von Vorteil, dass durch die Anordnung des Dehnungsmesselements in dem Innenraum des Gehäuses das Dehnungsmesselement vor äußeren Einflüssen geschützt ist, was sich positiv auf die Zuverlässigkeit und die Lebensdauer des Dehnungsmesselements auswirken kann.

Das Dehnungsmesselement kann eine Schutzumhüllung umfassen, welche das Dehnungsmesselement, bevorzugt vollständig, umgeben kann. Eine solche Schutzumhüllung kann insbesondere eine Silikonschicht oder dergleichen umfassen, die das Dehnungsmesselement vor äußeren Einflüssen schützt und sich damit positiv auf die Lebensdauer des Dehnungsmesselements auswirkt.

Gemäß einer Ausführungsform liegt das Dehnungsmesselement beispielsweise mit mindestens 80% oder 90% seiner Fläche oder vollständig an der Innenwand des Gehäuses der Dehnungsmessvorrichtung an. Das Dehnungsmesselement kann zudem auf seiner gesamten Anlagefläche mit der Innenwand fest verbunden sein. Hierdurch kann eine Verformung bzw. Dehnung des Gehäuses besonders vorteilhaft, insbesondere direkt, auf das Dehnungsmesselement übertragen und folglich gemessen werden. Das Dehnungsmesselement kann sich dann genauso verformen, wie das Gehäuse, wodurch eine sehr exakte Messung möglich wird.

Bevorzugt ist eine Außenwand des Gehäuses der Dehnungsmessvorrichtung, die derjenigen Innenwand zugeordnet ist, an welcher das Dehnungsmesselement anliegt, zumindest abschnittsweise eben, wobei sich das Dehnungsmesselement bevorzugt entsprechend einer Verformung der Außenwand und/oder der Innenwand verformt.

Gemäß einer vorteilhaften Ausführungsform ist der Innenraum vollständig mit der Flüssigkeit und/oder dem duktilen Feststoff gefüllt, wobei die Flüssigkeit und/oder der duktile Feststoff mit dem Dehnungsmesselement zumindest bereichsweise in Kontakt ist. Die Dehnungsmessvorrichtung kann also einen Innenraum umfassen, der allseitig abgeschlossen und dicht ist. Dies bedeutet, dass die Flüssigkeit und/oder der Feststoff in diesem Innenraum dauerhaft eingeschlossen ist, sodass Druck, der auf die Dehnungsmessvorrichtung wirkt, sich gleichmäßig in dem Innenraum verteilt. Durch eine gleichmäßige Druckverteilung können eventuelle Messfehler bzw. Messartefakte vermieden werden. Zudem kann die Dehnungsmessvorrichtung gleichmäßig und flächig an dem Messobjekt anliegen.

Die Flüssigkeit ist vorzugsweise eine viskose Flüssigkeit, insbesondere ein Öl. Öle sind inerte Flüssigkeiten. Das bedeutet, dass diese mit potentiellen Reaktionspartnern nicht oder nur in verschwindend geringem Maße reagieren. Somit kann durch das Öl das Dehnungsmesselement gut vor äußeren Einflüssen geschützt werden. Außerdem besitzen Öle auch eine bessere Wärmeleitfähigkeit als beispielsweise Luft. Auch diese Eigenschaft kann zu einer verbesserten Langlebigkeit der Dehnungsmessvorrichtung beitragen und auch Temperaturunterschiede innerhalb der Dehnungsmessvorrichtung ausgleichen.

Zusätzlich ist es auch möglich, den Innenraum anstelle mit der Flüssigkeit auch generell mit einem Fluid (also z.B. auch mit Gasen/Luft) zu füllen. Es sind auch Mischungen aus Gasen, Flüssigkeiten und/oder duktilen Feststoffen möglich. Bei Verwendung von Gasen können insbesondere Edelgase verwendet werden, die reaktionsarm sind und auf diese Weise eine Alterung des Dehnungsmesselements verlangsamen. Überdies kann das im Innenraum vorhandene Gas, die vorhandene Flüssigkeit und/oder der vorhandene duktile Feststoff unter Druck stehen, auch wenn die Dehnungsmessvorrichtung gerade nicht an das Messobjekt angepresst wird. Der Initial-Druck in dem Innenraum kann beispielsweise größer als 1 Bar, bevorzugt größer als 5 Bar und besonders bevorzugt größer als 10 Bar sein. Durch den Initial-Druck kann die Druckverteilung im Innenraum des Gehäuses weiter verbessert werden.

Im Gegensatz zu einem Gas ist die im Innenraum verwendete Flüssigkeit nicht komprimierbar.

Vorzugsweise ist der duktile Feststoff ein Kunststoff, ein Metall und/oder ein Silikon. Die Füllung des Innenraums kann je nach benötigtem Druck auf die Dehnungsmessvorrichtung unterschiedliche Materialien aufweisen. Wichtig ist lediglich, dass der Feststoff unter dem benötigten Druck verformbar ist, um den Anpressdruck gleichmäßig auf das Gehäuse zu verteilen.

Für die Füllung des Innenraums kann auch beispielsweise Wasser, flüssiges Wachs, flüssige Metalle und dergleichen verwendet werden. Ebenfalls kann z.B. ein Pulver, insbesondere aus Graphit, als Füllung Verwendung finden.

In einer Ausführungsform umfasst das Gehäuse zwei zumindest abschnittsweise zueinander symmetrische Halbschalen. Insbesondere sind die Halbschalen zumindest im Wesentlichen identisch. Durch die Verwendung zueinander symmetrischer bzw. identischer Halbschalen kann das Dehnungsmesselement bei der Produktion an der Innenwand der einen Halbschale befestigt werden, z.B. mittels einer stoffschlüssigen Verbindung, insbesondere mittels Kleben. Anschließend können die beiden Halbschalen miteinander verbunden werden, um den abgeschlossenen Innenraum zu bilden, der vor oder nach dem Verbinden der Halbschalen mit der Flüssigkeit und/oder dem duktilen Feststoff gefüllt wird.

Die Verwendung der beiden Halbschalen kann zum einen die mechanische Stabilität erhöhen. Zum anderen kann bei im Wesentlichen identischen Halbschalen eine hohe Passgenauigkeit realisiert werden. Die Halbschalen können des Weiteren in großer Stückzahl und damit kostengünstig produziert werden.

Zumindest eine Halbschale kann an einer Außenseite einen ebenen (d.h. planen) Anlageabschnitt aufweisen, welcher dazu dient, flächig an das Messobjekt angepresst zu werden. An einer Innenwand der Halbschale kann im Bereich des Anlageabschnitts ein bevorzugt ebener Messabschnitt angeordnet sein, an welchem das Dehnungsmesselement angeordnet ist. Außerhalb des Anlageabschnitts kann zumindest eine Halbschale einen um den Anlageabschnitt umlaufenden Verbindungsabschnitt aufweisen, welcher einen um den Anlageabschnitt hochgezogenen Rand bildet. Die zwei Halbschalen können insbesondere im Bereich des Verbindungsabschnitts miteinander verbunden sein. Bevorzugt umfasst der Rand eine Verbindungsfläche, die eben ausgebildet ist und sich parallel zur Erstreckung des Anlageabschnitts erstreckt. Die Verbindungsfläche gestattet auf einfache Weise die Erstellung einer dichten Verbindung zwischen den Halbschalen.

Vorzugsweise sind die Halbschalen miteinander verschweißt und/oder verklebt, wobei das Gehäuse bevorzugt aus einem Metall, insbesondere Aluminium, und/oder einem Kunststoff, insbesondere einem Polyimid, gefertigt ist. Das Gehäuse kann auch Karbon oder einen Faserverbundwerkstoff umfassen, wie z.B. Kohle- oder Glasfaser. Das Verschweißen und/oder Verkleben kann bevorzugt im Bereich der Verbindungsfläche der Halbschalen erfolgen. Durch das Verschweißen und/oder Verkleben der Halbschalen (je nach Material) wird ein dauerhaft dichter Innenraum geschaffen. Dieser verhindert ein Auslaufen der Flüssigkeit aus dem Innenraum und sorgt dadurch für eine lange Lebensdauer der Dehnungsmessvorrichtung. Für Anwendungen, die eine höhere Stabilität und eine bessere Wärmeleitfähigkeit erfordern, können metallische Gehäuse eingesetzt werden. Ist eine kostengünstige Produktion gewünscht, kann ein Kunststoffgehäuse eingesetzt werden.

Das Gehäuse und damit die Dehnungsmessvorrichtung können eine maximale Ausdehnung und/oder einen Durchmesser von etwa 1 bis 3 Zentimetern aufweisen. Insbesondere ist das Gehäuse und/oder der Innenraum zumindest im Wesentlichen rotationssymmetrisch ausgebildet. Als Rotationsachse kann dabei eine Senkrechte auf den ebenen Anlageabschnitt dienen.

Wie oben bereits angedeutet, ist eine Außenwand des Gehäuses, die derjenigen Innenwand zugeordnet ist, an welcher das Dehnungsmesselement anliegt, zumindest abschnittsweise eben. Das bedeutet, dass jener Bereich der Außenwand (d.h. der Anlageabschnitt), der genau dem Bereich der Innenwand zugeordnet ist, an der der Dehnungsmessstreifen bzw. das Dehnungsmesselement aufgebracht wurde (d.h. der Messabschnitt), zumindest abschnittsweise plan ist, da genau dieser Bereich auf die Oberfläche des Messobjekts angepresst werden muss.

Weist die Oberfläche des Messobjekts jedoch einen Krümmungsradius auf, ist es auch möglich, dass jener eben beschriebene Bereich der Außenseite (d.h. der Anlageabschnitt) diesem vorgegebenen Krümmungsradius entspricht, damit die Dehnungsmessvorrichtung beim Anpressen flächig an dem Messobjekt anliegen kann.

Gemäß einer weiteren Ausführungsform ist an einer dem Dehnungsmesselement entgegengesetzten Außenwand des Gehäuses eine Druckplatte vorgesehen, welche zum Anpressen des Gehäuses an ein Messobjekt ausgebildet ist. Diese Druckplatte kann beispielsweise eine Vertiefung für ein Befestigungselement, insbesondere eine Schraube, aufweisen. Durch das Festdrehen der Schraube kann die Druckplatte auf das Gehäuse und damit das Gehäuse an das Messobjekt drücken. Das Anpressen des Gehäuses mithilfe einer Druckplatte hat den Vorteil, dass der Druck genau an vorbestimmter Stelle eingeleitet werden kann. Gleichzeitig kann die Druckplatte aber auch eine Bohrung umfassen, die beispielsweise als Kabelführung für die elektrischen Anschlüsse des Dehnungsmesselements dient. Es versteht sich, dass Anstelle einer Schraube jeweils auch andere geeignete Befestigungsmittel oder Mittel zur Krafteinbringung verwendet werden können.

Die Dehnungsmessvorrichtung kann ein oder mehrere Anschlusskabel umfassen. Die Anschlusskabel können über eine abgedichtete Aussparung in einer Wand des Gehäuses aus der Dehnungsmessvorrichtung herausgeführt sein. Die Dehnungsmessvorrichtung kann mittels der Anschlusskabel mit elektrischer Energie versorgt werden. Alternativ kann die Dehnungsmessvorrichtung auch eine eigene Energiequelle, insbesondere eine Batterie und/oder einen Akku aufweisen.

Gemäß einer Ausführungsform ist/sind das Dehnungsmesselement, bzw. die metallischen Bestandteile desselben, direkt auf den Messabschnitt im Innenraum des Gehäuses aufgedampft oder mittels eines Ätzverfahrens aufgetragen. Insbesondere kann ein Dehnungsmessstreifen des Dehnungsmesselements auf diese Weise direkt auf den Messabschnitt aufgebracht werden.

Ebenso ist es möglich, auch andere elektrische Leiter, d.h. Teile der Anschlusskabel, direkt auf das Gehäuse der Dehnungsmessvorrichtung mittels Aufdampfen oder mittels eines Ätzverfahrens aufzubringen.

Mittels der Anschlusskabel bzw. der elektrischen Leiter können die von der Dehnungsmessvorrichtung erfassten Messsignale nach außen geleitet werden. Die Messsignale können dabei als analoges oder auch als digitales Signal übertragen werden. Zur Bereitstellung der Messsignale kann die Dehnungsmessvorrichtung, bevorzugt innerhalb des Gehäuses, eine Auswerteelektronik aufweisen. Die Auswerteelektronik kann insbesondere auch in dem Innenraum angeordnet sein. In diesem Fall ist es von Vorteil, wenn die Flüssigkeit oder der im Innenraum angeordnete duktile Feststoff nichtleitend sind.

Die Auswerteelektronik kann eine elektrische Wheatstone-Brücke, eine Vollbrücke, eine Halbbrücke und/oder eine Viertelbrücke umfassen, mit welcher eine Auswertung des Dehnungsmesselements erfolgt. Das Dehnungsmesselement kann Bestandteil einer der vorstehend genannten Brückenschaltungen sein.

Das Dehnungsmesselement umfasst bevorzugt zumindest einen Dehnungsmessstreifen, beispielsweise aus einem Metall, insbesondere einen Folien-, Draht-, und/oder Halbleiter-Dehnungsmessstreifen. Das Dehnungsmesselement kann auch Mehrfach-Dehnungsmessstreifen, Dehnungsmessstreifen mit Querdehnung, Vollbrücken-Dehnungsmessstreifen oder Rosetten-Dehnungsmessstreifen umfassen.

Das Dehnungsmesselement insgesamt oder auch nur der Dehnungsmessstreifen kann in der Draufsicht beispielsweise eine mäanderförmige, runde, ovale, quadratische oder rechteckige Form aufweisen. Das Dehnungsmesselement kann auch mehrere separate Dehnungsmessstreifen umfassen.

Das Dehnungsmesselement kann einen piezoelektrischen Sensor umfassen, insbesondere einen piezoelektrischen Kraftsensor. Der piezoelektrische Sensor kann eine Kraft beim Verformen des Gehäuses erfassen, wobei von der Dehnungsmessvorrichtung aus der Kraft eine Dehnung des Messobjekts ermittelt werden kann.

Der piezoelektrische Sensor umfasst bevorzugt zwei Kristallscheiben, zwischen welchen eine Elektrodenfolie angeordnet ist. Unter Einwirkung einer Kraft kann eine Ladung entstehen, die mittels eines Ladungsverstärkers nachgewiesen werden kann. Die Ladung ist insbesondere proportional zur anliegenden Kraft. Die Dehnungsmessvorrichtung kann, z.B. in dem Gehäuse, einen solchen Ladungsverstärker aufweisen.

Alternativ oder zusätzlich zu der Ausgabe der Messsignale mittels des Anschlusskabels können die Messsignale auch kabellos von der Dehnungsmessvorrichtung und/oder der Eigenspannungsmessvorrichtung übertragen werden, beispielsweise mittels Funk- und/oder Infrarotsignalen. Bevorzugt können gängige Funkstandards, wie WiFi (WLAN), Bluetooth, Bluetooth Low Energy (BLE) und/oder Zigbee verwendet werden. Ein entsprechender Funktransponder kann an oder in dem Gehäuse der Dehnungsmessvorrichtung angeordnet sein.

Ist ein Funktransponder in der Dehnungsmessvorrichtung bzw. der Eigenspannungsmessvorrichtung vorgesehen, so können mehrere Vorrichtungen auch ein sogenanntes Mesh-Funknetz ausbilden, bei welchem die einzelnen Vorrichtungen jeweils mit in Reichweite befindlichen weiteren Vorrichtungen kommunizieren. Auf diese Weise muss kein direkter Funkkontakt zu allen Vorrichtungen vorhanden sein. Stattdessen genügt gegebenenfalls schon der Funkkontakt zu einer einzigen Dehnungsmessvorrichtung, um über diese eine Vorrichtung die Messsignale aller Vorrichtungen zu empfangen.

Gemäß einer bevorzugten Ausführungsform ist zumindest ein zusätzlicher Sensor vorgesehen, welcher insbesondere ein Temperatursensor und/oder ein Drucksensor ist. Dieser zusätzliche Sensor kann ebenfalls im Innenraum des Gehäuses angeordnet und damit zumindest bereichsweise in Kontakt mit der Flüssigkeit und/oder mit dem duktilen Feststoff sein. Somit kann der zusätzliche Sensor einen Messwert über die Bedingungen, die im Innenraum des Gehäuses herrschen, liefern. Beispielsweise kann er eine Auskunft bzw. eine Warnung über eine Überlastung durch zu hohen Druck oder auch über eine Überhitzung geben.

Alternativ kann der zusätzliche Sensor auch andernorts in der Eigenspannungsmessvorrichtung angebracht sein, z.B. am Basisteil oder an einer Außenseite des Gehäuses, um so Informationen über die Umgebung der Eigenspannungsmessvorrichtung bzw. der Dehnungsmessvorrichtung zu liefern. Die von dem zusätzlichen Sensor erfassten Daten können gemeinsam mit den Messdaten des Dehnungsmesselements ausgegeben werden.

Der zusätzliche Sensor kann einen Temperatursensor (z.B. Thermoelement, Hitzdraht, Heißleiter - NTC, Kaltleiter - PTC, Halbleiter-Temperatursensor, Faseroptischer Temperatursensor, Bragg-Gitter-Sensor - FBGS), einen Beschleunigungssensor, einen Hallsensor, einen Drucksensor, ein Inclinometer, einen (induktiven) Kraftsensor, einen (induktiven) Wegaufnehmer und/oder einen Reed-Kontakt aufweisen. Andere Arten von Sensoren sind ebenfalls denkbar.

Vorzugsweise ist der zusätzliche Sensor ein Drucksensor, wobei die Dehnungsmessvorrichtung ausgebildet ist, ein Signal auszugeben, wenn der Druck im Innenraum zumindest einen vorbestimmten Schwellenwert übersteigt. Dieser Schwellenwert kann einerseits jener Wert sein, bei dem der Druck auf das Gehäuse zu groß wird und die Gefahr besteht, dass sich das Gehäuse aufgrund eines zu hohen Anpressdrucks verformt und/oder beschädigt wird. Hierdurch wird die Zuverlässigkeit der Dehnungsmessvorrichtung und folglich der Eigenspannungsmessvorrichtung gesteigert.

Andererseits kann der Schwellenwert auch jener Wert sein, bei dem der Anpressdruck erst groß genug ist, um überhaupt eine verlässliche Messung der Dehnung des Messobjekts zu gestatten. Dies bedeutet, der Schwellenwert gibt denjenigen Druck an, der benötigt wird, um eine Haftreibung zwischen der Dehnungsmessvorrichtung und dem Messobjekt zu erzeugen. Hierdurch kann die Montage der Dehnungsmessvorrichtung weiter vereinfacht werden. Es muss dann bei der Montage lediglich so lange der Druck auf die Dehnungsmessvorrichtung erhöht werden, bis die Dehnungsmessvorrichtung mitteilt, dass ein genügend hoher Anpressdruck an das Messobjekt erreicht wurde. In der Folge können Montagefehler vermieden werden.

Der Anpressdruck beim Anpressen an das Messobjekt kann im Innenraum der Dehnungsmessvorrichtung erfasst werden, da beim Anpressen der Dehnungsmessvorrichtung an das Messobjekt der Druck im Innenraum aufgrund einer immer vorhandenen Elastizität des Gehäuses steigt. Durch die Messung dieses Drucks kann folglich kontrolliert werden, wie stark die Dehnungsmessvorrichtung an das Messobjekt gepresst werden muss.

Möglich ist es auch, dass die Dehnungsmessvorrichtung bei beiden und/oder mehreren Schwellenwerten ein Signal ausgibt. Ebenfalls ist es möglich, dass die Dehnungsmessvorrichtung überhaupt erst Messwerte ausgibt, wenn ein genügend hoher Anpressdruck an das Messobjekt vorhanden ist.

Die Eigenspannungsmessvorrichtung und/oder das Basisteil kann bevorzugt wenigstens eine äußere Dimension zwischen 10 und 20 cm aufweisen. Insbesondere betragen zwei oder drei äußere Dimensionen zwischen 10 und 20 cm.

Die Aufgabe wird auch gelöst durch ein Verfahren zum Messen einer Eigenspannung eines Messobjekts mit den Schritten: Befestigen oder Anbringen einer Vorrichtung nach vorstehend beschriebener Art an einer Oberfläche des Messobjekts, sodass sich die Dehnungsmessvorrichtung in Anlage mit der Oberfläche befindet; Einbringen einer Ausnehmung in die Oberfläche mittels eines Zerspanungswerkzeug über die Führung der Vorrichtung; Aufnehmen eines Messwertes der Dehnungsmessvorrichtung; und Ermitteln der Eigenspannung des Messobjekts auf der Basis des Messwertes.

Dadurch, dass die Ausnehmung in die Oberfläche eingebracht wird, entspannt sich diese bzw. das Messobjekt an dieser Stelle. Die Entspannung bzw. Dehnung wird von der, insbesondere aufgepressten, Dehnungsmessvorrichtung gemessen. Von der gemessenen Entspannung bzw. Dehnung kann, z.B. durch mathematische Verfahren, auf die Eigenspannung geschlossen werden.

Insbesondere wird eine Formänderung der Oberfläche während des Einbringens der Ausnehmung, insbesondere Bohrung, gemessen und/oder es wird vorher und nachher wenigstens ein Messwert aufgenommen. Ziel ist es insbesondere, dass sich durch die Ausnehmung das Material entspannt und eine hieraus resultierende Formänderung gemessen wird.

Die Ausnehmung, insbesondere Bohrung, kann bevorzugt eine zur Oberfläche parallele Dimension, insbesondere einen Durchmesser, von wenigstens 1 mm und/oder höchstens 3 mm, insbesondere etwa 2 mm, aufweisen. Alternativ oder zusätzlich kann die Ausnehmung bevorzugt eine Tiefe von wenigstens 2 mm und/oder höchstens 5 mm aufweisen.

Die Aufgabe wird ferner gelöst durch ein Eigenspannungsmesssystem umfassend eine Vorrichtung nach vorstehend beschriebener Art zum Messen einer Eigenspannung eines Messobjekts, und ein Zerspanungswerkzeug mit einer mit der Führung der Vorrichtung kooperierenden Führungsfläche.

Vorzugsweise kann es vorgesehen sein, dass das Zerspanungswerkzeug einen, insbesondere vollzylindrischen, Bohrer, zum Beispiel einen Spiralbohrer, oder einen Kernbohrer oder eine Bohrkrone aufweist. Alternativ kann das Zerspanungswerkzeug auch ein Fräser, ein Schleifer oder dergleichen sein.

Es versteht sich, dass die hierin beschriebenen Vorrichtungen, Verfahren und Systeme zum Messen einer Eigenspannung vorteilhaft als solche und ihre Einzelmerkmale zumindest sinngemäß zur gegenseitigen vorteilhaften Weiterbildung herangezogen werden können.

Weitere Ausführungsformen ergeben sich aus der folgenden beispielhaften Beschreibung der Figuren. In dieser zeigt:
Fig.1: schematisch eine Dehnungsmessvorrichtung in einer Seitenansicht;
Fig.2: schematisch einen Querschnitt einer Dehnungsmessvorrichtung;
Fig. 3: schematisch ein Eigenspannungsmesssystem mit einer Eigenspannungsmessvorrichtung und einem Zerspanungswerkzeug;
Fig. 4: schematisch eine andere Ausführungsform eines Eigenspannungmesssystems.

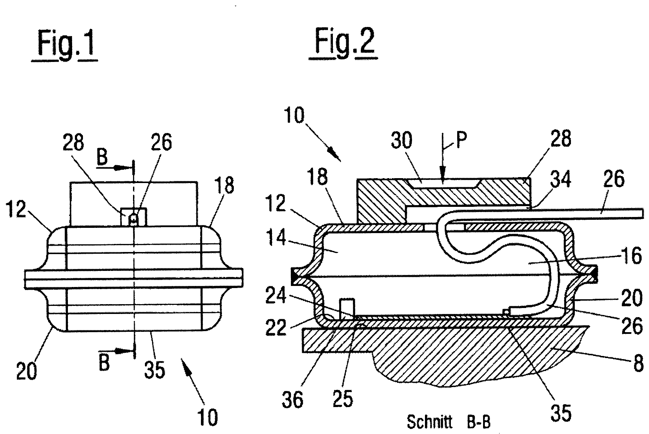

In Fig. 1 und Fig. 2 ist eine Dehnungsmessvorrichtung 10 in einer Seitenansicht bzw. in einem Querschnitt dargestellt. Die Dehnungsmessvorrichtung 10 umfasst ein Gehäuse 12, das einen allseitig abgeschlossenen Innenraum 14 begrenzt. Dieser Innenraum 14 ist mit einer Flüssigkeit (Medium) 16 gefüllt. Durch den allseitig umschlossenen Innenraum 14 ist das Medium 16 dicht und dauerhaft eingeschlossen. Somit kann das Medium 16 einen Anpressdruck, der auf die Dehnungsmessvorrichtung 10 wirkt, gleichmäßig verteilen.

Das Gehäuse 12 umfasst zwei zueinander symmetrische Halbschalen 18, 20, die miteinander verschweißt und/oder verklebt sind. Die Halbschalen 18, 20 sind aus einem Metall, insbesondere Aluminium, gefertigt.

An einer Innenwand 22, die der unteren Halbschale 20 des Gehäuses 12 zugeordnet ist, ist ein Dehnungsmesselement 24 in Form eines Dehnungsmessstreifens angeordnet. Das Dehnungsmesselement 24 ist in einem Messabschnitt 25 an der Innenwand 22 angebracht. Durch die Anordnung des Dehnungsmesselements 24 in dem Innenraum 14 des Gehäuses 12 ist das Dehnungsmesselement 24 gut vor äußeren Einflüssen geschützt. Des Weiteren ist es (auf der der Innenwand 22 abgewandten Seite) vollständig von dem Medium 16 umgeben, das sich im Innenraum 14 befindet, damit ein gleichmäßiger Druck auf das Dehnungsmesselement 24 wirkt. Ausgehend vom Dehnungsmesselement 24 erstreckt sich eine Verdrahtung bzw. ein Anschlusskabel 26 durch das Gehäuse 12 nach außen, um die erfassten Daten (Messdaten) des Dehnungsmesselements 24 auszugeben.

An einer Außenseite der oberen Halbschale 18 des Gehäuses 12 ist eine Druckplatte 28 angeordnet. Die Druckplatte 28 weist in dieser beispielhaften Ausführungsform eine Vertiefung 30 auf, in die ein nicht dargestelltes Befestigungselement 32, insbesondere eine Befestigungsschraube 32, eingreift. Die Druckplatte 28 dient dazu, einen Anpressdruck P auf die Dehnungsmessvorrichtung 10 auszuüben, um diese an ein Messobjekt 8 anzupressen. Des Weiteren weist die Druckplatte 28 eine Bohrung einer Kabelführung 34 auf, durch die die Anschlusskabel 26 des Dehnungsmesselements 24 aus dem Gehäuse 12 geführt werden. Eine Druckplatte kann beispielsweise alternativ oder zusätzlich zu einer Feder verwendet werden, welche die Dehnungsmessvorrichtung 10 an einem Basisteil abstützt.

Eine Außenwand 21 der unteren Halbschale 20 ist in der gezeigten Ausführungsform von Fig. 1 und Fig. 2 plan und bildet so einen Anlageabschnitt 35, welcher flächig auf eine plane Oberfläche des Messobjekts 8 gepresst wird.

Zusätzlich ist ein weiterer Sensor 36 im Innenraum 14 des Gehäuses 12 angeordnet, der ebenfalls von dem Medium 16 umgeben ist. Der Sensor 36 ist zugleich ein Temperatursensor und ein Drucksensor, welcher Messwerte über die Bedingungen im Innenraum 14 des Gehäuses 12 liefert. Die Daten des zusätzlichen Sensors 36 können beispielsweise über die Anschlusskabel 26 ausgegeben werden.

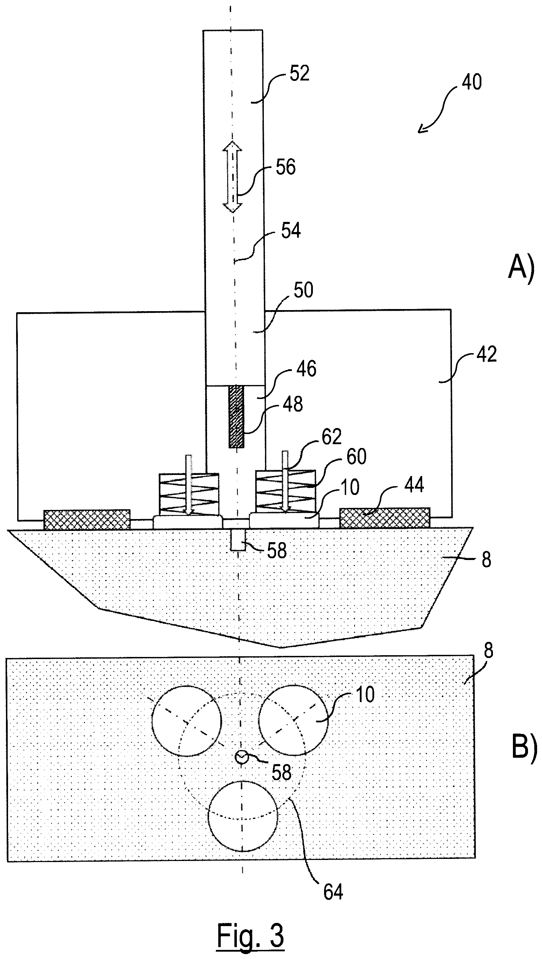

Die Fig. 3A zeigt ein Eigenspannungsmesssystem 40 in Anlage mit einem Messobjekt 8. Das Eigenspannungsmesssystem 40 umfasst in dieser Ausführungsform drei Dehnungsmessvorrichtungen 10, deren Anordnung in Fig. 3B näher veranschaulicht ist und unten näher beschrieben wird.

Das Eigenspannungsmesssystem 40 umfasst ein Basisteil 42, welches durch eine Halterung am Messobjekt 8 befestigt ist. Die Halterung ist hier durch Magnete 44 gebildet, wobei das Messobjekt 8 einen ferromagnetischen Werkstoff aufweist und somit das Basisteil 42 an diesem gehalten wird. Alternativ oder zusätzlich könnte die Halterung beispielsweise einen Klebeverbund und/oder eine Klemmvorrichtung umfassen.

Das Basisteil 42 definiert eine Führung 46 für ein Zerspanungswerkzeug, welches hier einen Bohrer 48 umfasst. Das Zerspanungswerkzeug umfasst einen mit der Führung 46 korrespondierenden Führungsbereich 50. Das Zerspanungswerkzeug umfasst außerdem einen Antriebsmotor 52 für den Bohrer 48.

Eine mögliche Bewegung des Bohrers 48 entlang der Führung 46 bzw. einer durch diese definierten Führungsachse 54 ist durch einen Pfeil 56 angedeutet. In der Darstellung der Fig. 3 ist bereits eine Ausnehmung in Form einer Bohrung 58 in das Messobjekt 8 eingebracht.

Die Dehnungsmessvorrichtungen 10 sind an dem Basisteil 42 jeweils durch eine Feder 60 abgestützt und in Anlage mit der Oberfläche des Messobjekts 8 gehalten. Dabei definieren die Federn 60 eine Anpresskraft 62. Die Dehnungsmessvorrichtungen 10 sind hierdurch derart beaufschlagt, dass sie zuverlässig eine Formänderung der Oberfläche des Messobjekt 8 im Anlagebereich erkennen, welche insbesondere über Haftreibung an die jeweilige Dehnungsmessvorrichtung 10 übertragen wird. Eine solche Formänderung tritt auf, wenn die Bohrung 58 eingebracht wird und das Messobjekt 8 im Bereich der Bohrung 58 eine Eigenspannung aufweist, welche somit mittelbar über die Formänderung der Oberfläche erkennbar und messbar ist.

Eine jeweilige Dehnungsmessvorrichtung 10 ist generell in der Nähe der Ausnehmung bzw. der Bohrung 58 angeordnet. In dieser Ausführungsform sind drei Dehnungsmessvorrichtungen 10 gleichmäßig um die Ausnehmung bzw. die Führungsachse 54 herum verteilt angeordnet. Dabei sind die Dehnungsmessvorrichtungen 10 mit einem jeweiligen Mittelpunkt auf einem gemeinsamen Kreis 64 angeordnet und über diesen gleichmäßig verteilt, d. h. im Abstand von 120° angeordnet. Es können grundsätzlich auch andere Anzahlen von Dehnungsmessvorrichtungen 10 vorgesehen sein, die dann bevorzugt in einem anderen Winkelabstand anzuordnen sind.

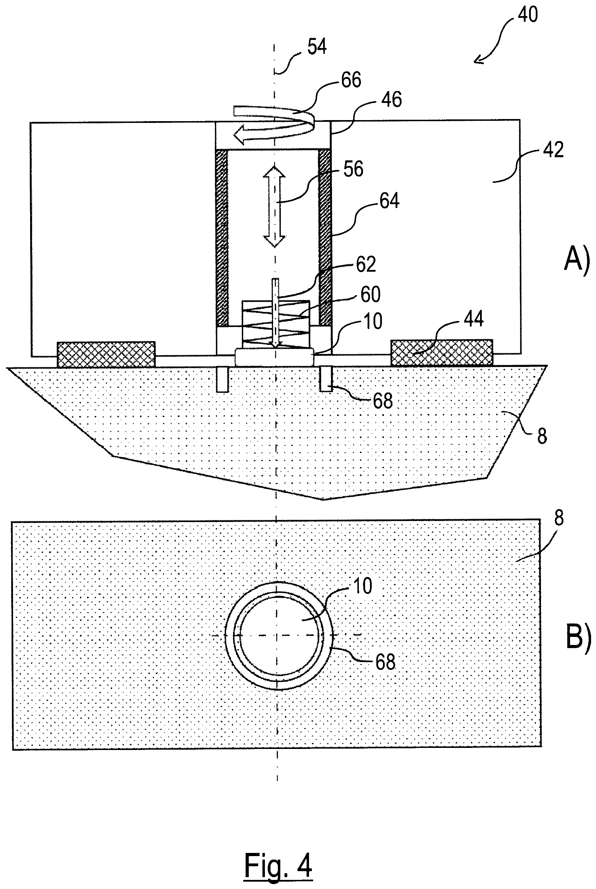

Fig. 4 zeigt eine weitere Ausführungsform eines Eigenspannungsmesssystems 40, wobei Fig. 4A den wesentlichen Aufbau des Systems und Fig. 4B insbesondere die Anordnung einer Dehnungsmessvorrichtung 10 relativ zu einer Ausnehmung illustriert.

Das Eigenspannungsmesssystem 40 umfasst ein Basisteil 42, welches über Magnete 44 am Messobjekt 8 befestigt ist und eine Führung 46 für ein Zerspanungswerkzeug definiert. Das Zerspanungswerkzeug ist hier als Kernbohrer 64 ausgebildet. Eine mögliche Bewegung des Kernbohrers 64 in der Führung 46 ist durch Pfeile 56 und 66 angedeutet.

Durch den Kernbohrer 64 wird zur Durchführung des Messverfahrens eine Ausnehmung in Form einer Ringnut 68 in die Oberfläche des Messobjekt 8 eingebracht, wie sie in Fig. 4 angedeutet ist.

In dieser Ausführungsform ist die Dehnungsmessvorrichtung 10 konzentrisch zur Ringnut 68 bzw. zur Führungsachse 54 angeordnet und zwar radial innerhalb der Ringnut 68 bzw. des Kernbohrers 64. Dabei ist die Dehnungsmessvorrichtung 10 bevorzugt über eine nicht dargestellte Befestigungsvorrichtung am Basisteil 42 befestigt, welche sich durch den Kernbohrer 64 hindurch erstreckt. Dabei kann der Kernbohrer bevorzugt seitlich angetrieben sein. Über die Befestigungsvorrichtung sind bevorzugt auch elektrische Verbindungskabel von der Dehnungsmessvorrichtung 10 zu einer nicht dargestellten Steuerungseinheit geführt, die beispielsweise am Basisteil 42 befestigt sein kann. Die Dehnungsmessvorrichtung 10 ist hier ebenfalls durch eine Feder 60 abgestützt und somit mit einer definierten Anpresskraft 62 in Anlage mit der Oberfläche des Messobjekts 8 gehalten.

Alternativ zu dem vorstehend beschriebenen Beispiel mit einer Befestigungsvorrichtung sieht eine hier nicht dargestellte Ausführungsform vor, dass ein Basisteil zumindest teilweise innerhalb eines Kernbohrers angeordnet ist und beispielsweise durch eine zylindrische Außenfläche eine Führung für den Kernbohrer definiert. Dabei kann insbesondere am Basisteil ein Vorschubantrieb und/oder ein Rotationsantrieb für den Kernbohrer befestigt sein. Eine dem in Fig. 4 gezeigten Basisteil 42 ähnliche Vorrichtung kann beispielsweise eine weitere Führung für den Kernbohrer definieren, die dann bevorzugt jedoch nur eine korrekte, insbesondere zur Oberfläche senkrechte, Ausrichtung des Kernbohrers definiert. Die Vorrichtung kann ähnlich wie das hier beschriebene Basisteil am Messobjekt gehalten sein.

Die beschriebenen Eigenspannungsmessvorrichtungen bzw. -systeme sind in der Lage, Eigenspannungen in verschiedenen Materialien (z.B. Stahl, Aluminium, Kunststoff) festzustellen. Grundsätzlich funktionieren sie auf der Grundlage der integralen Bohrlochmethode, also einem nahezu zerstörungsfreien Prüfverfahren.

Im Gegensatz zu aktuell verfügbaren und standardmäßig eingesetzten Eigenspannungsmesssystemen mit Dehnungsmessstreifen (DMS), welche aufwändig durch Aufkleben auf das zu messende Bauteil appliziert werden müssen, können die gezeigten Eigenspannungsmessvorrichtung durch eine einfache AufpressVerbindung auf dem Bauteil angebracht werden. Dabei kann z.B. eine Dehnungsmessvorrichtung verwendet werden, die eine Kapsel aus Polyimid umfasst, welche mit einer Flüssigkeit und/oder Silikon gefüllt ist. An der Unterseite der Kapsel ist beispielsweise ein herkömmlicher DMS appliziert. Die Unterseite der Kapsel wird mittels der Eigenspannungsmessvorrichtung bzw. des Basisteils auf das zu messende Bauteil, also das Messobjekt, gepresst, sodass Haftreibung zwischen der Unterseite der Kapsel und dem zu messenden Bauteil entsteht. Dadurch wird die Dehnung des zu messenden Bauteils auf den DMS übertragen. Die Eigenspannungsmessvorrichtung bzw. das Basisteil kann insbesondere mittels wenigstens eines Magneten oder einer Aufklemmvorrichtung auf das zu messende Bauteil aufgepresst werden. Dies ermöglicht einfache und schnelle Eigenspannungsmessungen.

Mindestens eine Dehnungsmessvorrichtung wird für eine solche Eigenspannungsanalyse verwendet, in der Regel und bevorzugt sind es jedoch mehrere. Insbesondere nach Herstellung der Aufpressverbindung wird zwischen den aufgepressten Dehnungsmessvorrichtungen oder in der Nähe der Dehnungsmessvorrichtung ein Loch gebohrt. Dadurch entspannt sich das zu messende Bauteil an dieser Stelle und diese Entspannung wird von den aufgepressten Dehnungsmessvorrichtungen gemessen. Über die durch die Entspannung gemessene Dehnung des zu messenden Bauteils kann durch mathematische Verfahren auf die Eigenspannung geschlossen werden. Es können aber auch andere Dehnungsmessvorrichtungen verwendet werden.

Die beschrieben Eigenspannungsmessvorrichtungen bzw. -systeme ermöglichen eine Eigenspannungsmessung ohne Verlust des Messmittels. Des Weiteren wird bei den bisherigen Methoden die erforderliche Bohrung oft nicht ordnungsgemäß platziert oder durch aufwendige Vorrichtungen realisiert. Diese Messunsicherheit bzw. Messaufwand fällt bei den beschriebenen Eigenspannungsmessvorrichtungen bzw. -systemen durch die insbesondere fixe Anordnung der wenigstens einen Dehnungsmessvorrichtung und der Bohrvorrichtung weg und eliminiert dadurch Messunsicherheiten und Fehlerquellen. Somit kann gegenüber bisherigen Methoden äußerst schnell, sicher, günstig und mit erheblicher Kostenreduktion gearbeitet werden.

### Bezugszeichenliste

- 8: Messobjekt
- 10: Dehnungsmessvorrichtung
- 12: Gehäuse
- 14: Innenraum
- 16: Medium
- 18: Obere Halbschale
- 20: Untere Halbschale
- 21: Außenwand
- 22: Innenwand
- 24: Dehnungsmesselement
- 25: Messabschnitt
- 26: Anschlusskabel
- 28: Druckplatte
- 30: Vertiefung
- 32: Befestigungselement, Befestigungsschrauben
- 34: Kabelführung
- 35: Anlageabschnitt
- 36: Sensor
- P: Anpressdruck
- 40: Eigenspannungsmesssystem
- 42: Basisteil
- 44: Magnet
- 46: Führung
- 48: Bohrer
- 50: Führungsbereich
- 52: Antriebsmotor
- 54: Führungsachse
- 56: Bewegung des Bohrers
- 58: Bohrung
- 60: Feder
- 62: Anpresskraft
- 64: Kernbohrer
- 66: Rotationsbewegung des Kernbohrers
- 68: Ringnut

## Patentansprüche

1. Vorrichtung zum Messen einer Eigenspannung eines Messobjekts (8) umfassend:
eine Dehnungsmessvorrichtung (10) zur Anlage an das Messobjekt (8),
eine Führung (46) für ein Zerspanungswerkzeug (48, 64), welche derart angeordnet ist, dass mittels des Zerspanungswerkzeugs (48, 64) eine Ausnehmung (58, 68) an einer durch die Führung (46) definierten Position in das Messobjekt (8) einbringbar ist,
und ein Basisteil (42),
wobei die Dehnungsmessvorrichtung (10) derart an dem Basisteil (42) gehalten ist, dass sie in Anlage mit dem Messobjekt (8) eine definierte Position relativ zur Führung (46) aufweist.

2. Vorrichtung nach Anspruch 1,
wobei die Führung (46) durch das Basisteil (42) definiert und/oder mit diesem fest verbunden ist.

3. Vorrichtung nach Anspruch 1 oder 2,
wobei die Führung (46) und die Dehnungsmessvorrichtung (10) durch das Basisteil (42) relativ zueinander fest positioniert oder fest positionierbar sind.

4. Vorrichtung nach zumindest einem der vorstehenden Ansprüche,
wobei die Führung (46) zur Führung eines Bohrers (48, 64) ausgebildet ist.

5. Vorrichtung nach zumindest einem der vorstehenden Ansprüche,
wobei die Vorrichtung eine Halterung (44) zur Befestigung des Basisteils (42) an dem Messobjekt (8) aufweist.

6. Vorrichtung nach Anspruch 5,
wobei die Halterung einen Magneten (44) und/oder eine Klemmvorrichtung aufweist.

7. Vorrichtung nach zumindest einem der vorstehenden Ansprüche,
wobei die Vorrichtung dazu ausgebildet ist, die Dehnungsmessvorrichtung (10) durch Pressen in Anlage mit dem Messobjekt (8) zu halten.

8. Vorrichtung nach zumindest einem der vorstehenden Ansprüche,
wobei eine Dehnungsmessvorrichtung (10) vorgesehen ist, die zentrisch zur Führung angeordnet ist.

9. Vorrichtung nach zumindest einem der vorstehenden Ansprüche,
wobei mehrere Dehnungsmessvorrichtungen (10) vorgesehen sind, die um eine Führungsachse (54) herum gleichmäßig verteilt angeordnet sind.

10. Vorrichtung nach zumindest einem der vorstehenden Ansprüche,
wobei die Dehnungsmessvorrichtung (10) mittels einer Feder (60) gegenüber dem Basisteil (42) abgestützt ist.

11. Vorrichtung nach Anspruch 10,
wobei die Feder (60) die Kraft definiert, mit der die Dehnungsmessvorrichtung (10) an dem Messobjekt (8) gehalten ist.

12. Vorrichtung nach zumindest einem der vorstehenden Ansprüche,
wobei die Dehnungsmessvorrichtung (10) ein Gehäuse (12), welches einen allseitig abgeschlossenen mit einer Flüssigkeit (16) und/oder einem duktilen Feststoff gefüllten Innenraum (14) begrenzt, und zumindest ein Dehnungsmesselement (24) zur Erfassung einer Verformung des Gehäuses(12) aufweist, welches in dem Innenraum (14) angeordnet ist und zumindest abschnittsweise an einer Innenwand des Gehäuses (12) anliegt.

13. Verfahren zum Messen einer Eigenspannung eines Messobjekts (8) mit den Schritten:
Befestigen einer Vorrichtung nach einem der vorstehenden Ansprüche an einer Oberfläche des Messobjekts (8), sodass sich die Dehnungsmessvorrichtung (10) in Anlage mit der Oberfläche befindet,
Einbringen einer Ausnehmung (58, 68) in die Oberfläche mittels eines Zerspanungswerkzeugs (48, 64) über die Führung (46) der Vorrichtung,
Aufnehmen eines Messwertes der Dehnungsmessvorrichtung (10),
Ermitteln der Eigenspannung des Messobjekts (8) auf der Basis des Messwertes.

14. Eigenspannungsmesssystem (40) umfassend
eine Vorrichtung nach einem der Ansprüche 1 bis 12 zum Messen einer Eigenspannung eines Messobjekts (8), und
ein Zerspanungswerkzeug (48, 64) mit einer mit der Führung der Vorrichtung kooperierenden Führungsfläche.

15. Eigenspannungsmesssystem nach Anspruch 14,
wobei das Zerspanungswerkzeug einen vollzylindrischen Bohrer (48) oder einen Kernbohrer (64) aufweist.
